# EUROPÄISCHE PATENTSCHRIFT

(11) **EP 1 742 330 B1**
(45) Veröffentlichungstag und Bekanntmachung des Hinweises auf die Patenterteilung: **30.09.2009**
(21) Anmeldenummer: 05014884.0
(22) Anmeldetag: 08.07.2005
(51) Int. Cl.: H02K 3/50

(54) **Ständerwickelkopf, Ständerteil und Turbogenerator**
Winding head of a stator, stator of an electric machine and turbogenerator
Tête de bobine d'un stator, stator d'une machine électrique et turboalternateur

(43) Veröffentlichungstag der Anmeldung: 10.01.2007
(73) Patentinhaber: SIEMENS AKTIENGESELLSCHAFT, 80333 München (DE)
(72) Erfinder: Kowalski, Waldemar, 45472 Mülheim an der Ruhr (DE); Lehmann, Christoph, Dr., 47506 Neukirchen-Vluyn (DE); Pohlmann, Friedhelm, Dr., 45355 Essen (DE); Spiess, Karlheinz, 47445 Moers (DE)

(56) Entgegenhaltungen:
- EP-A- 1 168 574
- DE-A1- 19 914 942
- US-A- 4 115 915
- US-A- 4 321 497
- US-A- 5 623 178
- US-A1- 2004 100 157

## Beschreibung

Die Erfindung betrifft einen Ständerwickelkopf für ein Ständerteil eines Turbogenerators sowie ein Ständerteil mit einem Ständerwickelkopf und einen Turbogenerator.

Ein Turbogenerator ist eine von einer Turbine angetriebene elektrische Maschine zur Erzeugung von Strom. Turbogeneratoren können heutzutage Leistungen zwischen 100 MW und 1500 MW erzeugen. Üblicherweise weist ein Turbogenerator ein Ständerteil und einen im Ständerteil drehbar gelagerten und von der Turbine antreibbaren Läufer auf. Ein magnetisches Feld wird üblicherweise mit einer strombeaufschlagten Läuferwicklung auf dem Läufer erzeugt, das oftmals ein einziges Polpaar aufweist. Darüber hinaus sind Läuferwicklungen auch mit zwei oder drei Polpaaren möglich. Auf diese Weise induziert ein magnetisches Drehfeld einen Strom in elektrischen Ständerleitern des Ständerteils. Das Turbogeneratorständerteil weist ein Ständergehäuse und ein Ständeraktivteil auf, das einen ferromagnetischen Hohlkörper und Ständerleiter als Teile einer Ständerwicklung und eines Schaltleitungsverbandes zur Erzeugung von ein-, zwei-, drei- oder mehrphasigem Strom aufweist. Der ferromagnetische Hohlkörper ist in der Regel durch das so genannte Ständerblechpaket gebildet, in das die Ständerwicklung eingelegt ist. Die Strombeaufschlagung der Ständerwicklung wird in der Regel über den potential gesteuerten Schaltleitungsverband bewerkstelligt.

Die in der Regel in Form von Stäben ausgebildeten Ständerleiter treten üblicherweise an einem stirnseitigen Endteil des Ständeraktivteils aus, sind abgebogen und auf einer Kegeloberfläche zusammengeführt und derart miteinander verschaltet, dass pro Polpaar und Phase des Turbogenerators eine Wicklungsanordnung, beispielsweise in Form einer Spulenanordnung, gebildet ist, in die bei Drehung des Läufers ein Strom induzierbar ist. Die Verschaltung der Ständerleiter erfolgt im so genannten Wickelkopf, der bei üblichen Ausführungen eines Turbogenerators nicht Teil des Ständeraktivteils ist.

Die Verschaltung der Ständerleiter erfolgt in Kombination mit Versteifungs- und Stützelementen am Wickelkopf. Diese Maßnahme ist je nach Anzahl der Polpaare und Phasenzahl des Turbogenerators aufwendig und benötigt aufgrund der üblichen Kegelform des Ständerwickelkopfes, z. B. bei Generatoren im Bereich von 100 MW bis 1500 MW einen Platzbedarf, der etwa 1 m bis 2 m der axialen Länge eines Turbogenerators ausmacht. Darüber hinaus hat sich gezeigt, dass die oben erläuterte Konstruktion bei einem Ständerwickelkopf nicht nur eine zeit-und kostenintensive Fertigung erfordert, sondern im Betriebsfall eines Turbogenerators in der Regel auch hohen Kraft- und Schwingungsbelastungen aufgrund der auftretenden Strom- und Magnetkräfte ausgesetzt ist. Insbesondere in Störfällen oder in transienten Betriebsbereichen eines Turbogenerators erweisen sich die auf einen Ständerwickelkopf wirkenden Schwingungsanregungen als besonders nachteilig.

In der DE 199 14 942 A1 wird ein Verfahren zur Herstellung der Statorwicklung von elektrischen Maschinen mit ausgeprägten Statorpolen beschrieben. Dabei ragen die Spulenleiter mit ihren Enden in axialer Richtung über das Statorblechpaket hinaus und sind in Klemmen von Baugruppen befestigt auf den Baugruppen befinden sich Leiterbahnen, die die Windungen mit den Leitern bilden.

Wünschenswert wäre eine gleichzeitig betriebssichere, einfachere und Raum sparende Möglichkeit, Ständerleiter einer Ständerwicklung oder eines Schaltungleitungsverbandes unter Vermeidung der oben genannten Probleme zu verschalten.

An dieser Stelle setzt die Erfindung an, deren Aufgabe es ist, eine Vorrichtung anzugeben, bei der eine gleichzeitig betriebssichere und Raum sparende Verschaltung von Ständerleitern gegeben ist.

Betreffend die Vorrichtung wird die Aufgabe durch die Erfindung mit einem eingangs genannten Ständerwickelkopf für ein Ständerteil eines Turbogenerators gelöst, bei dem erfindungsgemäß der Ständerwickelkopf in Form einer Scheibe mit einer mittigen Auslassung zur Durchführung eines Läufers gebildet ist, wobei die Scheibe einen isolierenden Grundkörper aufweist, in den eine elektrische Verbindung zur Kontaktierung eines Ständerleiters integriert ist, wobei der Ständerwickelkopf Mittel zur Kühlung der elektrischen Verbindung aufweist.

Die Erfindung geht dabei von der Überlegung aus, dass die bisher üblichen aufwendigen Konstruktionen zur Verschaltung von Ständerleitern in einem Ständerwickelkopf konstruktions-und geometriebedingt auf einer Kegeloberfläche erfolgen. Die Erfindung hat darüber hinaus erkannt, dass sich abhängig von Polpaarzahl und Phasenzahl eines Turbogenerators eine angemessene Verschaltung in Form einer oder mehrerer elektrischer Verbindungen zur Kontaktierung eines oder mehrerer Ständerleiter gleichwohl in einem isolierenden Grundkörper einer Scheibe integrieren lässt.

Dies hat den Vorteil, dass die Scheibengeometrie gegenüber der bisher üblichen Kegelgeometrie eines Ständerwickelkopfes eine kompaktere Bauweise darstellt und zu einer wesentlichen axialen Verkürzung eines Ständerteils bzw. eines Turbogenerators beitragen kann. Darüber hinaus erweist sich ein in einem isolierenden Grundkörper integriertes elektrisches Verbindungssystem mit einer oder mehreren Verbindungen als mechanisch wesentlich stabiler und hinsichtlich von Schwingungsanregungen in seiner Integrität wesentlich kompakter und schwingungsunanfälliger als die bisher übliche aufwendige raumgreifende Ständerleitungsverschaltung.

Eine Kühlung kann vorzugsweise durch indirekte Kühlmittel zur Verfügung gestellt werden, bei der eine elektrische Verbindung vor allem von außen oberflächengekühlt wird. Dazu kann die Scheibe des Ständerwickelkopfes Kühlbohrungen, Schlitze oder andere Formen von Ausnehmungen zur Aufnahme einer Kühlluftströmung aufweisen. Darüber hinaus lassen sich auch direkte Kühlmittel innerhalb der elektrischen Verbindung realisieren, beispielsweise in Form von kühlmittelbeaufschlagbaren Bohrungen oder Kanälen in der elektrischen Verbindung.

Vorteilhafte Weiterbildungen der Erfindung sind den Unteransprüchen zu entnehmen und geben im Einzelnen vorteilhafte Möglichkeiten an, das erläuterte Konzept mit weiteren Vorteilen zur realisieren.

Insbesondere ist die Scheibe in Form eines einstückigen auf das Ständerteil aufsteckbaren Moduls gebildet. Durch die modulare Bauweise des Ständerwickelkopfes ist dieser nicht mehr integral mit dem Ständeraktivteil verbunden, sondern lässt sich vielmehr als Modul einfacher und schneller austauschen. Insbesondere ist dies der Fall für ein aufsteckbares Modul. Ein Kontakt des aufsteckbaren Moduls ist dabei vorteilhaft in Form einer Steckverbindung gebildet. Der Kontakt kann auch ähnlich wie eine Durchkontaktierung auf einer Leiterplatte, ein so genanntes "Via", beschaffen sein. Die Geometrie und Anordnung der Steckverbindungen und/oder Vias ist dabei zweckmäßigerweise auf die Geometrie und Anordnung der aus dem Ständeraktivteil austretenden Ständerleiter angepasst.

Der isolierende Grundkörper des scheibenförmigen Ständerwickelkopfes ist vorzugsweise aus isolierenden Materialien wie einer zweckmäßig zu wählenden Keramik oder einem isolierenden Kunststoffmaterial gefertigt.

Vorzugsweise sind die elektrischen Verbindungen als Einlage und/oder Aufbringung integriert, d. h. integral im oder mit dem Grundkörper verbunden. Dies hat sich als besonders Raum sparend erwiesen, da sich alle elektrischen Verbindungen kompakt, insbesondere praktisch innerhalb des Raumbedarfs der Scheibe, unterbringen lassen.

Die elektrische Verbindung ist vorzugsweise in Form eines Leiterverlaufs und/oder einer Verschaltung und/oder in Form eines Kontaktes gebildet. Als Kontakt eignet sich insbesondere ein Vias. Als ein Leiterverlauf eignet sich insbesondere eine Blechanordnung, die beispielsweise kreissegmentförmig dem Verlauf der Scheibe angepasst sein kann. Darüber hinaus kann eine Verschaltung insbesondere in der Scheibe innen liegend angeordnet sein. Alle elektrischen Verbindungen sind auf diese Weise besonders vorteilhaft gegeneinander isoliert, gegen Beschädigungen geschützt und darüber hinaus schwingungsunanfällig mechanisch eingebettet.

Zur lösbaren Befestigung des Ständerwickelkopfes am Ständerteil eignet sich vorzugsweise eine Schraubverbindung. Beispielsweise können mehrere Schrauben entlang eines Umfangs der Scheibe angeordnet sein. Es können aber auch Löt- oder Schweißverbindungen vorgesehen sein.

Hinsichtlich der Vorrichtung führt die Erfindung auch auf ein Ständerteil mit einem oben erläuterten Ständerwickelkopf gemäß dem neuen Konzept und einem Ständeraktivteil, das einen ferromagnetischen Hohlkörper und Ständerleiter als Teil einer Ständerwicklung und/oder eines Schaltleitungsverbandes aufweist.

Vorzugsweise ist die elektrische Verbindung des Ständerwickelkopfes in Form eines elektrischen Leiterverlaufs ausgebildet und verbindet aus dem Ständeraktivteil austretende Ständerleiter. Dabei hat es sich als besonders zweckmäßig erwiesen, dass eine elektrische Verbindung Ständerleiter einer Wicklungsanordnung der Ständerwicklung verbindet. Unter einer Wicklungsanordnung ist insbesondere ein spulenartiges Wicklungsgebilde zu verstehen, dessen längsseitige Komponenten im Wesentlichen durch Ständerleiter auf dem Ständeraktivteil gebildet sind und deren radiale Komponenten durch die genannten elektrischen Verbindungen des Ständerwickelkopfes gebildet sind. Insbesondere hat sich im Unterschied zu einer Einschichtwicklung eine Zweischicht- oder Mehrschichtwicklung als vorteilhaft zur Bildung einer Wicklungsanordnung der Ständerwicklung erwiesen. Dabei sind Wicklungsleiter zweckmäßigerweise in einer so genannten Oberlage einerseits und in einer so genannten Unterlage andererseits angeordnet.

Ein Ständerleiter ist vorzugsweise in Form eines Wicklungsstabes gebildet. Insbesondere bildet die elektrische Verbindung einen Kontakt in Form eines elektrischen Stabanschlusses für einen Ständerleiter in Form eines Wicklungsstabes. Darüber kann die elektrische Verbindung mit einem Kontakt in Form eines elektrischen Schaltstabanschlusses eine Zuleitung zu einer Stromdurchführung bilden.

Die Erfindung führt auch auf einen Turbogenerator mit einem Gehäuse und einem in dem Gehäuse angeordneten Ständerteil sowie einem im Ständerteil angeordneten Läufer.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Im Einzelnen zeigt die Zeichnung in:
- FIG 1: eine dreidimensional perspektivische Schemaansicht eines Turbogenerators einer bevorzugten Ausführungsform gemäß dem neuen Konzept;
- FIG 2: eine Teilansicht eines Turbogenerators als einen Schnitt durch einen scheibenförmigen Ständerwickelkopf mit integrierten elektrischen Verbindungen gemäß der besonders bevorzugten Ausführungsform;
- FIG 3: eine stirnseitige Draufsicht auf die Teilansicht der FIG 2, welche den scheibenartigen Ständerwickelkopf mit integrierten elektrischen Verbindungen gemäß der besonders bevorzugten Ausführungsform zeigt.

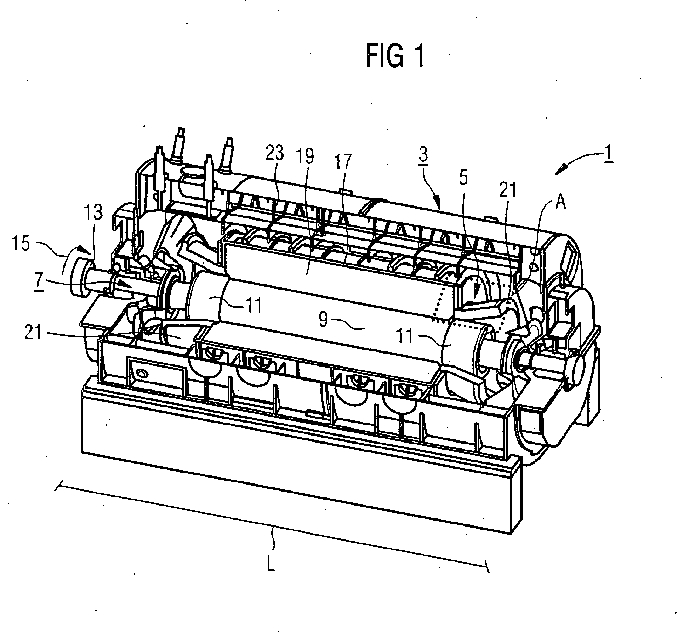

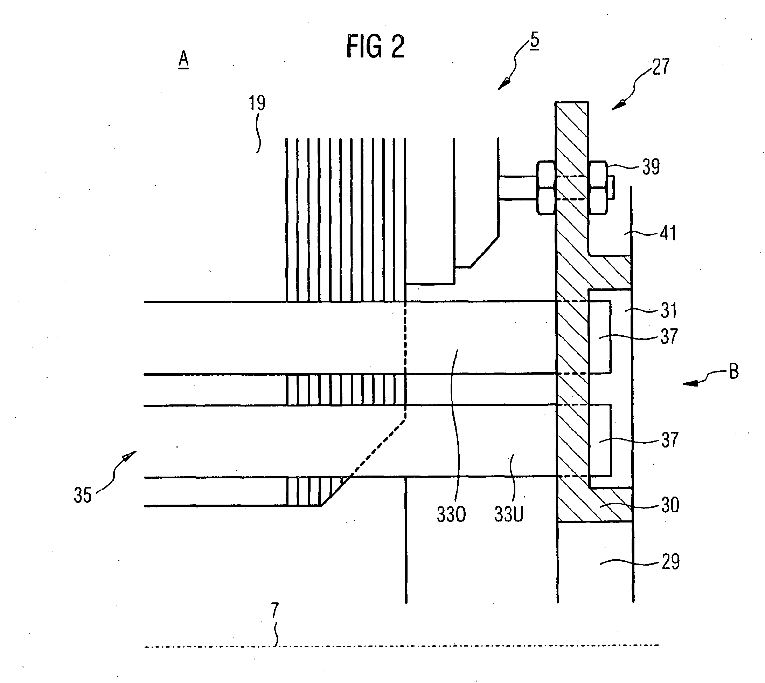

FIG 1 zeigt schematisch einen Turbogenerator 1 mit einem Ständerwickelkopf gemäß einer bevorzugten Ausführungsform. Der Generator 1 weist ein Gehäuse 3 sowie ein in dem Gehäuse 3 angeordnetes Ständerteil 5 und einen im Ständerteil drehbar angeordneten Läufer 7 auf. Der Läufer 7 weist ein Aktivteil 9 auf, das eine nicht näher gezeigte Läuferwicklung aufweist zur Darstellung eines in dieser Ausführungsform zweipoligen, gegebenenfalls in anderen Ausführungsformen auch vierpoligen oder sechspoligen Magnetfeldes. Das Läuferaktivteil ist durch zwei Läuferkappen 11 begrenzt und zusammen mit dem Läuferaktivteil 9 auf der Läuferwelle 13 gelagert. Der über eine Turbine in Drehbewegung 15 versetzbare Läufer 7 erzeugt somit ein magnetisches Drehfeld, das die in FIG 2 näher dargestellten Ständerleiter 330, 33U des Ständers 5 mit einem variablen magnetischen Fluss durchsetzt, so dass in den Ständerleitern 330, 33U nach dem Induktionsgesetz ein Strom induziert wird. Der Ständer 5 weist dazu ein Ständeraktivteil 17 auf, das u. a. aus einem ferromagnetischen Hohlkörper 19 in Form eines Blechpakets gebildet ist. In das den ferromagnetischen Hohlkörper 19 bildende Blechpaket sind die in FIG 2 näher dargestellten Ständerleiter 330, 33U als Teil einer Ständerwicklung mit einem angeschlossenen Schaltleitungsverband eingelegt. Die Ständerwicklung im Blechpaket weist bei dem vorliegenden zweipoligen zur Erzeugung von Dreiphasendrehstrom ausgelegten Turbogenerator 1 drei Wicklungsanordnungen auf, die praktisch jeweils eine Spule bilden. Das heißt, die Ständerwicklung ist vorliegend in Form einer Dreiphasendrehstromwicklung gebildet und zu einem Stern oder Dreieck geschaltet. Dabei bilden drei Enden der drei Wicklungsanordnungen jeweils eine Phase. Drei weitere Enden der drei Wicklungsanordnungen sind in einem Sternpunkt zum Nullleiter verschaltet.

Bei der in FIG 1 dargestellten bevorzugten Ausführungsform eines Turbogenerators 1 erfolgt die Verschaltung der Ständerleiter im symbolisch dargestellten Wickelkopf 21, der jeweils an einem stirnseitigen Ende des Ständerteils 5 direkt angrenzend zum Ständeraktivteil 17 angeordnet ist. Der Wickelkopf 21 zählt damit nicht mehr zum aktiven Teil des Turbogenerators 1.

Die Ständerleiter 330, 33U sind, wie in FIG 2 gezeigt, in Form von Stäben gebildet, die im Ständerwickelkopf 27 gemäß der bevorzugten Ausführungsform verschaltet sind. Dazu treten die Stäbe 330, 33U aus dem Ständeraktivteil 17 aus und sind zur Bildung der oben beschriebenen spulenartigen Wicklungsanordnungen verschaltet. Der Ständerwickelkopf 27 ist damit je nach Anzahl der Polpaare des Läuferaktivteils 9 und je nach Anzahl der durch das Ständeraktivteil 17 gebildeten Phasen ausgelegt. Die Verschaltung kann je nach Bedarf die unterschiedlichen Wicklungsanordnungen in Reihe oder parallel zueinander schalten. Dazu sind die Stäbe je nach Zweckmäßigkeit z. B. verlötet, verklebt oder verschraubt.

Für jede spulenartige Wicklungsanordnung werden zwei Enden der Ständerleitungen zur Leistungsabnahme über so genannte Stromdurchführungen 23 und ein Leitungsterminal zur Abgabe der im Turbogenerator 1 generierten Leistung nach außen, gegebenenfalls über einen Transformator oder einen Umformer, an ein nicht näher dargestelltes Netz gegeben.

FIG 2 zeigt einen in FIG 1 angedeuteten Ausschnitt A einer besonders bevorzugten Ausführungsform eines nicht weiter dargestellten Turbogenerators 1 gemäß dem neuen Konzept.

FIG 2 zeigt den Ausschnitt A in einer Schnittdarstellung. In der Schnittdarstellung ist ein Teil des den ferromagnetischen Hohlkörper 19 bildenden Blechpakets gezeigt. Der Ständerwickelkopf 27 des Ständerteils 5 in FIG 2 ist in Form einer Scheibe mit einer mittigen Auslassung 29 zur Durchführung eines durch die strichpunktierte Linie symbolisch dargestellten Läufers 7 gebildet. Die Scheibe des Ständerwickelkopfes 27 gemäß dem neuen Konzept weist dabei einen isolierenden Grundkörper 30 auf, in den elektrische Verbindungen 31 integriert sind. Die elektrische Verbindung 31 ist dabei als Einlage in den isolierenden Grundkörper 30 des scheibenförmigen Ständerwickelkopfes 27 integriert. Eine elektrische Verbindung 31 ist dabei insbesondere in Form einer Steckverbindung gebildet. Die Steckverbindung dient dabei zur Aufnahme der endseitigen Enden von Ständerleitungen 330, 33U, welche Teil einer nicht näher dargestellten Wicklungsanordnung 35 einer Ständerwicklung sind. Sie bilden bei dieser Ausführungsform eine Zweischichtwicklung mit einer stabförmigen Ständerleitung 330 in einer Oberlage und einer stabförmigen Ständerleitung 33U in einer Unterlage. Dazu werden in einer in dem Blechpaket geführten Nut jeweils zwei Ständerleitungen in Form von Stäben geführt. Ein Stab 330 ist dabei in einer Oberlage geführt und ein weiterer Stab 33U ist dabei in einer Unterlage geführt. Die Enden 37 der Ständerleitungen 330, 33U sind in die als Steckverbindung ausgebildete elektrische Verbindung 31 des Ständerwickelkopfes 27 eingesteckt. Der Ständerwickelkopf 27 ist dabei im Übrigen in Form eines einstückigen aufsteckbaren Moduls gebildet, das auf diese Weise leicht auswechselbar ist.

Durch die Bildung einer Zweischichtwicklung sind höhere Werte für die generierten Ströme oder Spannungen zu erreichen, was letztendlich die Leistungsabgabe des nicht näher dargestellten Turbogenerators 1 gemäß dem neuen Konzept erhöht. In anderen nicht näher dargestellten Ausführungsformen sind aber durchaus auch Einschichtwicklungen als auch Drei-, Vier- oder andere Mehrschichtwicklungen möglich.

Der scheibenförmige Ständerwickelkopf 27 ist darüber hinaus über eine Schraubverbindung 39 am Ständeraktivteil 19 lösbar befestigt. Insbesondere ist der scheibenförmige Ständerwickelkopf 27 über die als Steckverbindung ausgebildete elektrische Verbindung 31 auf die Enden 37 der Ständerleitungen 330, 33U aufgesteckt und mit einer Schraubverbindung 39 gesichert, die in einer Klinke 41 versenkt sind. In der mittigen Auslassung 29 ist der Läufer 7 durchgeführt.

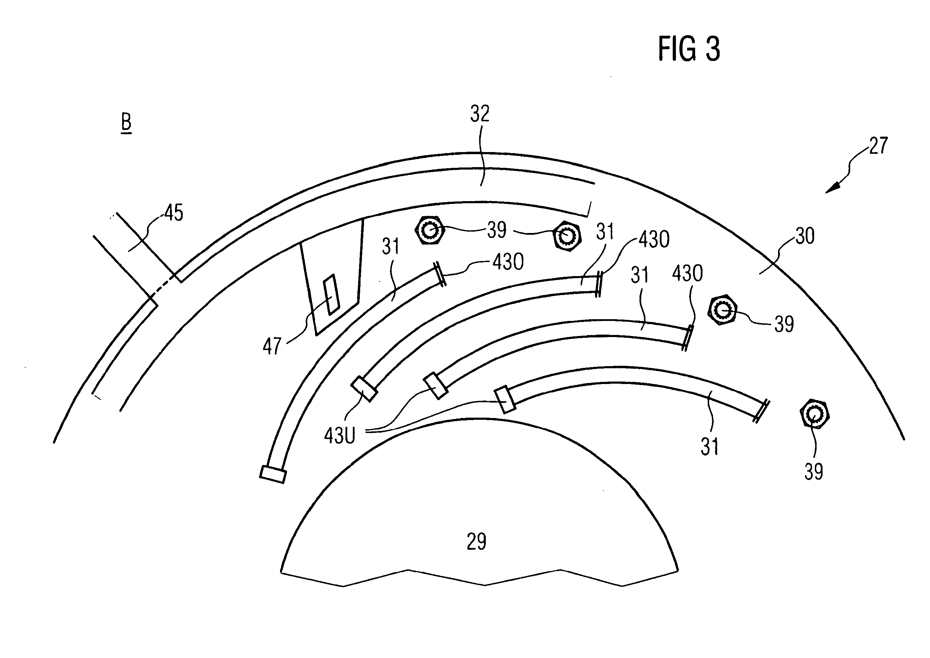

FIG 3 zeigt die stirnseitige Draufsicht auf den in FIG 2 gezeigten Ausschnitt A.

Die Draufsicht B zeigt einen Teil des scheibenförmigen Ständerwickelkopfes 27 mit dem isolierenden Grundkörper 30 und den elektrischen Verbindungen 31 in Form von Leiterverläufen. Insbesondere weisen die elektrischen Verbindungen die bereits in FIG 2 angedeuteten Kontakte 430 für die Enden 37 eines stabförmigen Ständerleiters 330 einer Oberlage auf. Daneben sieht eine elektrische Verbindung einen Anschluss 43U für das Ende 37 eines stabförmigen Ständerleiters 33U eine Unterlage vor. Neben den Kontakten 430, 43U ist eine weitere elektrische Verbindung 32 in Form eines elektrischen Schaltstabanschlusses mit einer Zuleitung 45 zu einer Stromdurchführung versehen. Die elektrische Verbindung 32 weist dabei einen ähnlich wie die Anschlüsse 320, 32U im isolierenden Grundkörper 30 integrierten Schaltstabanschluss 47 auf. Im Bereich der Zuleitung 45 zu einer Stromdurchführung 23 ist die elektrische Verbindung 32 durch eine Aufbringung auf dem isolierenden Grundkörper 30 integriert.

Durch die in den FIG 2, 3 im Einzelnen beschriebene besonders bevorzugte Ausführung eines Ständerwickelkopfes 27 wird eine besonders Zeit und Kosten sparende modulare Fertigung für den Ständerwickelkopf 27 erreichbar. Durch die scheibenartige Form des Ständerwickelkopfes 27 wird ein im Vergleich zu einem üblichen Ständerwickelkopf geringerer Platzbedarf benötigt. Selbst bei hohen Kraft- und Schwingungsbelastungen im Betriebs- oder Störfall ist die Verschaltung der Ständerleitungen 330, 33U selbst für hohe Stromkräfte im Blechpaket oder Schwingungsanregungen durch Lager gering gehalten. Dies wird durch die Integration der elektrischen Verbindungen 31, 32 im isolierenden Grundkörper 30 des Ständerwickelkopfes 27 erreicht. Ein mit einem Ständerwickelkopf 27 gemäß der besonders bevorzugten Ausführungsform ausgestatteter Turbogenerator 1 hat also eine kompaktere und axial kürzere Bauweise und eine bessere mechanische Stabilität im Vergleich zu Turbogeneratoren, die übliche Ständerwickelköpfe aufweisen.

Ständerleiter eines Ständeraktivteils 17 werden in einem nicht aktiven Teil des Ständerteils eines Turbogenerators 1 an einem so genannten Ständerwickelkopf 27 derart verschaltet, dass insgesamt eine für die Zahl der Polpaare und Phasen des Turbogenerators 1 angemessene Anzahl von Wicklungsanordnungen entstehen. Um eine aufwendige und Platz raubende Verschaltung zu vermeiden, ist bei einem Ständerwickelkopf 27 für ein Ständerteil 5 eines Turbogenerators 1 gemäß dem neuen Konzept vorgesehen, dass der Ständerwickelkopf 27 in Form einer Scheibe mit einer mittigen Auslassung 29 zur Durchführung eines Läufers 7 gebildet ist, wobei die Scheibe einen isolierenden Grundkörper 30 aufweist, in den eine elektrische Verbindung 31, 32 für Ständerleiter 330, 33U integriert ist.

## Patentansprüche

1. Ständerwickelkopf (27) für ein Ständerteil (5) eines Turbogenerators (1), wobei
der Ständerwickelkopf (27) in Form einer Scheibe mit einer mittigen Auslassung (29) zur Durchführung eines Läufers (7) gebildet ist, wobei die Scheibe einen isolierenden Grundkörper (30) aufweist, in den eine elektrische Verbindung (31, 32) zur Kontaktierung eines Ständerleiters (330, 33U) integriert ist, **gekennzeichnet durch**
Mittel zur Kühlung der elektrischen Verbindung (31, 32).

2. Ständerwickelkopf (27) nach Anspruch 1,
**dadurch gekennzeichnet, dass**
die Scheibe in Form eines einstückigen auf das Ständerteil (5) aufsteckbaren Moduls gebildet ist.

3. Ständerwickelkopf (27) nach Anspruch 1 oder 2,
**dadurch gekennzeichnet, dass**
ein Kontakt (430, 43U, 47) in Form einer Steckverbindung und/oder Vias gebildet ist.

4. Ständerwickelkopf (27) nach einem der Ansprüche 1 bis 3,
**dadurch gekennzeichnet, dass**
die elektrische Verbindung (31, 32) als eine Einlage oder Aufbringung integriert ist.

5. Ständerwickelkopf (27) nach einem der Ansprüche 1 bis 4,
**dadurch gekennzeichnet, dass**
die elektrischen Verbindung (31) in Form eines Leiterverlaufes oder einer Verschaltung oder eines Kontaktes (430, 43U) gebildet ist.

6. Ständerwickelkopf (27) nach einem der Ansprüche 1 bis 5,
**gekennzeichnet durch**
eine Schraubverbindung (39) zur lösbaren Befestigung des Ständerwickelkopfes (27) am Ständerteil (5).

7. Ständerteil (5) mit einem Ständerwickelkopf (27) nach einem der vorhergehenden Ansprüche
und einem Ständeraktivteil (17),
das einen ferromagnetischen Hohlkörper (19) und Ständerleiter (330, 33U) als Teil einer Ständerwicklung und/oder eines Schaltleitungsverbandes aufweist.

8. Ständerteil (5) nach Anspruch 7,
**dadurch gekennzeichnet, dass**
die elektrische Verbindung (31, 32) in Form eines elektrischen Leiterverlaufes Ständerleiter (330, 33U), insbesondere Ständerleiter einer Wicklungsanordnung (35) der Ständerwicklung, insbesondere Ständerleiter einer Oberlage und einer Unterlage, verbindet.

9. Ständerteil (5) nach Anspruch 7 oder 8,
**dadurch gekennzeichnet, dass**
die elektrische Verbindung (31) einen Kontakt (430, 43U) in Form eines elektrischen Stabanschlusses für einen Ständerleiter (330, 33U) in Form eines Wicklungsstabes aufweist.

10. Ständerteil (5) nach einem der Ansprüche 7 bis 9,
**dadurch gekennzeichnet, dass**
eine elektrische Verbindung (32) mit einem Kontakt (47) in Form eines elektrischen Schaltstabanschlusses (47) eine Zuleitung zu einer Stromdurchführung (23) bildet.

11. Turbogenerator (1) mit einem Gehäuse (3) und einem in dem Gehäuse (3) angeordneten Ständerteil (5) nach einem der Ansprüche 7 bis 10 sowie einem im Ständerteil (5) angeordneten Läufer (7).

## Claims

1. Stator end winding (27) for a stator part (5) of a turbogenerator (1), wherein
the stator end winding (27) is formed in the form of a disc having a central cutout (29) for leading through a rotor (7), wherein the disc has an insulating basic body (30), into which is integrated an electrical connection (31, 32) for making contact with a stator conductor (330, 33U),
**characterized by**
means for cooling the electrical connection (31, 32).

2. Stator end winding (27) according to Claim 1,
**characterized in that**
the disc is formed in the form of an integral module that can be plugged onto the stator part (5).

3. Stator end winding (27) according to Claim 1 or 2,
**characterized in that**
a contact (430, 43U, 47) is formed in the form of a plug connection and/or vias.

4. Stator end winding (27) according to any of Claims 1 to 3,
**characterized in that**
the electrical connection (31, 32) is integrated as an inlay or application.

5. Stator end winding (27) according to any of Claims 1 to 4,
**characterized in that**
the electrical connection (31) is formed in the form of a conductor course or an interconnection or a contact (430, 43U).

6. Stator end winding (27) according to any of Claims 1 to 5,
**characterized by**
a screw connection (39) for releasably fixing the stator end winding (27) to the stator part (5).

7. Stator part (5) with a stator end winding (27) according to any of the preceding claims
and a stator active part (17),
which has a ferromagnetic hollow body (19) and stator conductors (330, 33U) as part of a stator winding and/or of a switching line assembly.

8. Stator part (5) according to Claim 7,
**characterized in that**
the electrical connection (31, 32) in the form of an electrical conductor course connects stator conductors (330, 33U), in particular stator conductors of a winding arrangement (35) of the stator winding, in particular stator conductors of an upper layer and of a lower layer.

9. Stator part (5) according to Claim 7 or 8,
**characterized in that**
the electrical connection (31) has a contact (430, 43U) in the form of an electrical bar connection for a stator conductor (330, 33U) in the form of a winding bar.

10. Stator part (5) according to any of Claims 7 to 9,
**characterized in that**
an electrical connection (32) with a contact (47) in the form of an electrical switching bar connection (47) forms a lead to a current bushing (23).

11. Turbogenerator (1) comprising a housing (3) and a stator part (5) according to any of Claims 7 to 10 arranged in the housing (3) and also a rotor (7) arranged in the stator part (5).

## Revendications

1. Tête ( 27 ) de bobine de stator pour une partie ( 5) de stator d'un turboalternateur ( 1 ), dans laquelle
la tête ( 27 ) de bobine de stator est sous la forme d'un disque ayant une partie ( 29 ) centrale laissée libre pour le passage d'un rotor, le disque ayant un corps ( 30 ) de base isolant, dans lequel est intégrée une liaison ( 31, 32 ) électrique pour la mise en contact d'un conducteur ( 330, 33U ) de stator
**caractérisée par** des moyens de refroidissement de la liaison ( 31, 32 ) électrique.

2. Tête ( 27 ) de bobine de stator suivant la revendication 1,
**caractérisée en ce que**
le disque a la forme d'un module d'un seul tenant pouvant être emmanché sur la partie ( 5 ) de stator.

3. Tête ( 27 ) de bobine de stator suivant la revendication 1 ou 2,
**caractérisée en ce que**
un contact ( 430, 43U, 47 ) est formé sous la forme d'une liaison par enfichage et/ou de traversée.

4. Tête ( 27 ) de bobine de stator suivant l'une des revendications 1 à 3,
**caractérisée en ce que**
la liaison ( 31, 32 ) électrique est intégrée sous la forme d'une insertion ou d'un dépôt.

5. Tête ( 27 ) de bobine de stator suivant l'une des revendications 1 à 4,
**caractérisée en ce que**
la liaison ( 31 ) électrique est sous la forme d'un tracé de conducteur ou d'un câblage ou d'un contact ( 430, 43U ).

6. Tête ( 27 ) de bobine de stator suivant l'une des revendications 1 à 5,
**caractérisée par**
un vissage ( 39 ) pour fixer, de manière amovible, la tête ( 27 ) de bobine de stator à la partie ( 5 ) de stator.

7. Partie ( 5 ) de stator ayant une tête ( 27 ) de bobine de stator suivant l'une des revendications précédentes
et une partie ( 17 ) active de stator,
qui a un corps ( 19 ) creux ferromagnétique et des conducteurs ( 330, 33U ) de stator en tant que partie d'un enroulement de stator et/ou d'un système de ligne de connexion.

8. Partie ( 5 ) de stator suivant la revendication 7,
**caractérisée en ce que**
la liaison ( 31, 32 ) électrique relie, sous la forme d'un tracé de conducteur électrique, des conducteurs ( 330, 33U ) de stator, notamment des conducteurs de stator d'un agencement ( 35 ) de l'enroulement de stator, notamment des conducteurs de stator d'une couche supérieure et d'une couche inférieure.

9. Partie ( 5 ) de stator suivant la revendication 7 ou 8,
**caractérisée en ce que**
la liaison ( 31 ) électrique a un contact ( 430, 43U ) sous la forme d'une borne électrique en forme de barre pour un conducteur ( 330, 33U ) de stator sous la forme d'une barre d'enroulement.

10. Partie ( 5 ) de stator suivant l'une des revendications 7 à 9,
**caractérisée en ce que**
une liaison ( 32 ) électrique forme avec un contact ( 47 ) sous la forme d'une borne ( 47 ) électrique en forme de barre une ligne menant à une traversée ( 23 ) de courant.

11. Turboalternateur ( 1 ) comprenant un carter ( 3 ) et une partie ( 5 ) de stator disposée dans le carter ( 3 ) suivant l'une des revendications 7 à 10, ainsi qu'un rotor ( 7 ) disposé dans la partie ( 5 ) de stator.
